# EUROPEAN PATENT APPLICATION

(11) **EP 3 823 269 A1**
(43) Date of publication of application: **19.05.2021**
(21) Application number: 19208535.5
(22) Date of filing: 12.11.2019
(51) Int. Cl.: H04N 5/345, H04N 5/351, H04N 9/04

(54) **COLOR IMAGE RECONSTRUCTION**

(71) Applicant: Axis AB, 223 69 Lund (SE)
(72) Inventor: Benderius, Björn, 223 69 Lund (SE); Muhrbeck, Andreas, 223 69 Lund (SE)
(74) Representative: AWA Sweden AB

(57) **Abstract**

The present invention relates to a method (30) and an image capturing device (10) for reconstructing a color image (40, 50, 60) from raw image data depicting a scene (20), the raw image data produced by the image capturing device (10) comprising at least one image sensor (102). The method (30) comprising: identifying (S302) at least one region of interest in the raw image data; and reconstructing (S304) the color image (40, 50, 60) by: demosaicing (S306) the at least one region of interest in the raw image data using a first demosaic algorithm, and demosaicing (S308) regions outside the at least one region of interest in the raw image data using a second demosaic algorithm; and wherein the first demosaic algorithm is configured for enhancing high spatial frequencies in raw image data to a larger extent compared to the second demosaic algorithm.

## Description

### Technical field

The present invention relates to a method for reconstructing, and to an image capturing device configured to reconstruct, a color image from raw image data depicting a scene.

### Background of the invention

In digital imaging, an image sensor is typically only sensitive to the intensity of incident light, and the resulting image is therefore in grayscale. In order to produce color images, the colors of the incident light must be determined. This is typically done by separating the light incident onto the imaging device into red, green, and blue components, and then determining the intensity of each component. The color separation can be realized by using separate image sensors, where different optics (e.g. color filters, prisms) are used such that each image sensor only detects one of the colors. However, this arrangement is expensive and sensitive to alignment errors, while typically being problematic to calibrate. A different technique is to use a color filter array in front of a single image sensor, such that each pixel on the image sensor determines the intensity of one color. The color image can then be produced by reconstructing the color image, which typically includes demosaicing of the raw image. During demosaicing, missing image data for the colors is calculated from the image itself using different algorithms, such that a full color image is reconstructed from the incomplete color image captured by the image sensor. However, reconstructing color images having many details typically requires more computation power and results in images having larger file sizes. Thus, there exists a need for an improved color image reconstruction.

### Summary of the invention

In view of the above, it is an object of the present invention to provide a method and an image capturing device for reconstructing a color image.

It is an object to mitigate, alleviate or eliminate one or more of the above-identified deficiencies in the art and disadvantages singly or in any combination and solve at least the above-mentioned problem.

According to a first aspect a method for reconstructing a color image from raw image data depicting a scene, the raw image data produced by an image capturing device comprising at least one image sensor is provided. The method comprising: identifying at least one region of interest in the raw image data; and reconstructing the color image by: demosaicing the at least one region of interest in the raw image data using a first demosaic algorithm, and demosaicing regions outside the at least one region of interest in the raw image data using a second demosaic algorithm; and wherein the first demosaic algorithm is configured for enhancing high spatial frequencies in raw image data to a larger extent compared to the second demosaic algorithm.

By means of the present method, the at least one region of interest in the raw image data and regions outside the at least one region of interest may be demosaiced using different demosaic algorithms. Since the first demosaic algorithm is configured for enhancing high spatial frequencies in raw image data to a larger extent compared to the second demosaic algorithm, the image quality of the region of interest may be maintained while the file size is reduced by reducing the image quality in regions outside the region of interest. Thus, computation power for reconstructing the color image and/or an associated bandwidth for transmitting the reconstructed color image may thereby be reduced. Alternatively, the image quality of the region of interest may be enhanced while keeping the file size is essentially the same by reducing the image quality in regions outside the region of interest.

At least a part of the first demosaic algorithm may comprise a multi-pass non-linear interpolation of the raw image data, and at least a part of the second demosaic algorithm may comprise a linear interpolation of the raw image data.

An associated advantage is that the second demosaic algorithm may require less computation power than the first demosaic algorithm, and the computation power required for reconstructing the color image may thereby be reduced. A further associated advantage is that a file size of raw image data demosaiced using the second demosaic algorithm may be reduced compared to a file size of the raw image data demosaiced using the first demosaic algorithm, thereby allowing a file size of the reconstructed color image to be reduced.

The method may further comprise: determining a depth map of the scene; and receiving focus data of imaging optics of the image capturing device; wherein the step of identifying at least one region of interest in the raw image data may comprise determining portions of the scene being in focus by the image capturing device based on the depth map and the focus data; and wherein the at least one region of interest in the raw image data may correspond to the determined portions of the scene being in focus.

An associated advantage is that the enhancement of high spatial frequencies is only attempted in portions of the scene that are in focus by the image capturing device. The file size of the reconstructed color image may thereby be reduced while the image quality in the region of interest is maintained. Similarly, the file size of the reconstructed color image may thereby be maintained while the image quality in the region of interest is enhanced.

The image capturing device may comprise at least two image sensors, and wherein the depth map may be determined by comparing raw image data produced by at the least two image sensors.

An associated advantage is that the depth map may be determined by the image capturing device, thereby allowing for the determined depth map to be regularly updated. For example, distances to objects moving in the scene may be determined and included in the depth map, and thereby allowing for determining if the moving objects are in or out of focus.

The depth map may be determined by a radar.

An associated advantage is that the depth map may be determined with higher accuracy, thereby allowing for an enhanced determining of portions of the scene being in focus.

The method may further comprise: receiving data associated with a level of motion of portions of the scene; and wherein the at least one region of interest in the raw image data may correspond to portions of the scene having a level of motion below a threshold level of motion.

Imaged portions of the scene may be associated with a motion blur in the raw image data related to the level of motion in the portions of the scene.

By "motion blur" here is generally meant the apparent smearing of details in the raw image data for moving objects.

An associated advantage is that the enhancement of high spatial frequencies is only attempted in portions of the scene that have a motion blur in the raw image data below a threshold level of motion blur associated with the threshold level of motion.

The threshold level of motion may be based on an exposure time associated with the raw image data.

An associated advantage is that the threshold level of motion may be related to a level of motion blur in the raw image data, thereby allowing for the adaption of the threshold level of motion depending on a present exposure time associated with the raw image data. For example, in case the exposure time is varying, the threshold level of motion may vary as well.

The raw image data may be associated with a plurality of raw images in a video sequence, the method may further comprise: determining the data associated with the level of motion of portions of the scene by comparing raw image data of a raw image with raw image data of a preceding raw image in the video sequence.

An associated advantage is that the data associated with the level of motion of portions of the scene may be determined from the raw image data, thereby allowing for the level of motion to be determined without the use of additional sensors.

The data associated with the level of motion of portions of the scene may indicate a direction of motion for portions of the scene, and wherein the second demosaic algorithm may be configured for enhancing high spatial frequencies in raw image data to a relatively larger extent in directions different from the direction of motion.

An associated advantage is that the image quality of details not affected by motion blur may be enhanced by enhancing high spatial frequencies in raw image data in directions different from the direction of motion.

The method may further comprise: analyzing the raw image data in order to determine colors for portions in the scene; and wherein the at least one region of interest in the raw image data may correspond to portions of the scene having a color included in a predetermined set of colors.

An associated advantage is that portions in the scene having a color not included in the predetermined set of colors may be reconstructed using the second demosaic algorithm, thereby reducing the computation power of the color image reconstruction. Furthermore, a flexible approach is achieved where the predetermined set of colors may be changed over time, reflecting e.g. an operator's intention for monitoring the scene. As an example, if there is a search warrant out for a red car, the predetermined set of colors may be adjusted accordingly.

According to a second aspect an image capturing device configured to reconstruct a color image from raw image data depicting a scene is provided. The device comprising: at least one image sensor configured to produce the raw image data depicting the scene; imaging optics configured to image the scene onto the at least one image sensor; a region of interest component configured to identify at least one region of interest in the raw image data; and a color image reconstruction component configured to reconstruct the color image by being configured to: demosaic the at least one region of interest in the raw image data using a first demosaic algorithm, and demosaic regions outside the at least one region of interest in the raw image data using a second demosaic algorithm; and wherein the first demosaic algorithm is configured for enhancing high spatial frequencies in raw image data to a larger extent compared to the second demosaic algorithm.

The above-mentioned features of the method, when applicable, apply to this second aspect as well. In order to avoid undue repetition, reference is made to the above.

The image capturing device may further comprise: a depth map component configured to determine a depth map of the scene; and a focus component configured to: receive focus data of the imaging optics, and determine portions of the scene being in focus by the image capturing device based on the depth map and the focus data; and wherein the at least one region of interest in the raw image data may correspond to the portions of the scene being in focus.

The image capturing device may further comprise: a motion data component configured to determine data associated with a level of motion of portions of the scene; and wherein the at least one region of interest in the raw image data may correspond to portions of the scene having a level of motion below a threshold level of motion.

The raw image data may be associated with a plurality of raw images in a video sequence, and wherein the motion data component may be further configured to: determine the data associated with the level of motion of portions of the scene by comparing raw image data of a raw image with raw image data of a preceding raw image in the video sequence.

The motion data component may be further configured to, for each portion of the scene: identify a preceding position in the scene for the portion in the raw image data associated with a preceding raw image of the video sequence; and identify a position in the scene for the portion in the raw image data associated with a raw image of the video sequence; and wherein the data associated with the level of motion of portions of the scene is determined based on the preceding position and the position.

The image capturing device may further comprise: a color analyzation component configured to analyze the raw image data in order to determine colors for portions in the scene; and wherein the at least one region of interest in the raw image data may correspond to portions of the scene having a color included in a predetermined set of colors.

According to a third aspect a non-transitory computer-readable storage medium having stored thereon a program which is executable on an electronic device having processing capabilities is provided. The program comprises program code portions which when executed on the electronic device is configured to: identify at least one region of interest in raw image data; and reconstruct a color image by being configured to: demosaic at least one region of interest in the raw image data using a first demosaic algorithm, and demosaic regions outside the at least one region of interest in the raw image data using a second demosaic algorithm; and wherein the first demosaic algorithm is configured for enhancing high spatial frequencies in raw image data to a larger extent compared to the second demosaic algorithm.

The above-mentioned features of the method and the image capturing device, when applicable, apply to this third aspect as well. In order to avoid undue repetition, reference is made to the above.

A further scope of applicability of the present disclosure will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

Hence, it is to be understood that this inventive concept is not limited to the particular steps of the methods described or component parts of the device described as such method and device may vary. It is also to be understood that the terminology used herein is for purpose of describing particular variants only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief description of the drawings

The above and other aspects of the present inventive concept will now be described in more detail, with reference to appended drawings showing variants of the invention. The figures should not be considered limiting the invention to the specific variant; instead they are used for explaining and understanding the invention.

As illustrated in the figures, the sizes of layers and regions are exaggerated for illustrative purposes and, thus, are provided to illustrate the general structures of variants of the present inventive concept. Like reference numerals refer to like elements throughout.
Figure 1A illustrates an image capturing device comprising a radar.
Figure 1B illustrates an image capturing device comprising two image sensors.
Figure 2A illustrates an example measurement scenario.
Figure 2B - 2D illustrate color images depicting the scene of Fig. 2A.
Figure 3 is a box scheme of a method for reconstructing a color image from raw image data depicting a scene.
Figure 4 illustrates a non-transitory computer-readable storage medium having stored thereon a program which is executable on an electronic device having processing capabilities.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

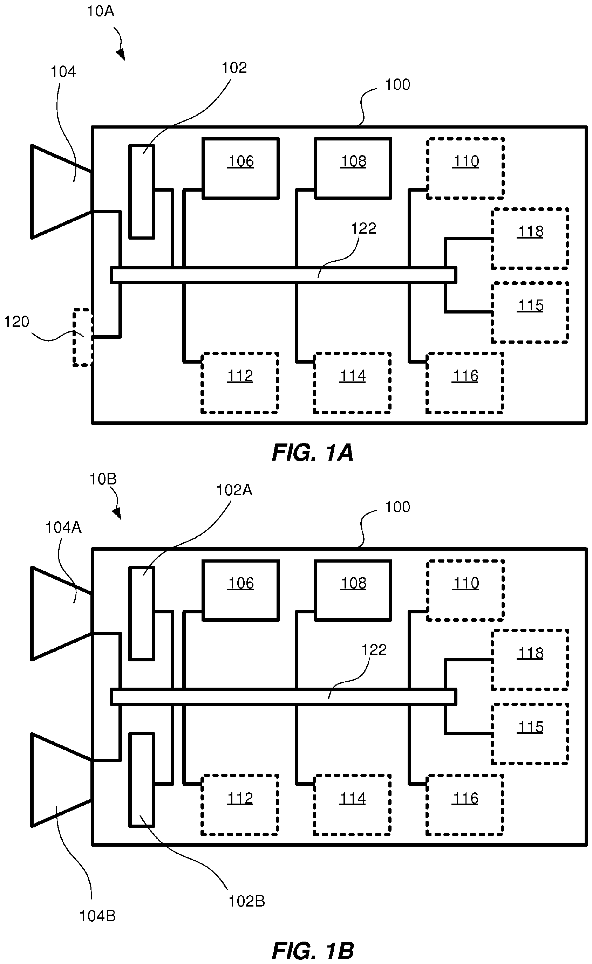

Figure 1A illustrates an image capturing device 10A configured to reconstruct a color image from raw image data depicting a scene 20.

The image capturing device 10A comprises a housing 100, at least one image sensor 102, imaging optics 104, a region of interest component 106, and a color image reconstruction component 108.

The at least one image sensor 102 is configured to produce the raw image data depicting the scene 20. The at least one image sensor 102 may comprise a color filter array. The color filter array may be a Bayer filter; however, a skilled person realizes that there is a plurality of different choices for color filter arrays and knows how the present inventive concept is adapted accordingly.

The color filter array may be configured to allow the at least one image sensor 104 to separate color information of the scene 20. Each pixel of the raw image data may comprise an intensity of one of the colors of the color filter. Thus, the raw image data may be undersampled regarding color information of the scene 20, and missing color information may be determined in order to produce a color image. Such processes are typically referred to as color image reconstructions.

The image capturing device 10A may further comprise a non-transitory computer-readable storage medium 118. The non-transitory computer-readable storage medium 118 may be configured to store the raw image data depicting the scene 20.

The imaging optics 104 is configured to image the scene 20 onto the at least one image sensor 102.

The region of interest component 106 is configured to identify at least one region of interest in the raw image data. Data associated with the identified at least one region of interest may be stored on the non-transitory computer-readable storage medium 118. The at least one region of interest in the raw image data may correspond to an object in the scene 20.

The color image reconstruction component 108 is configured to reconstruct the color image by being configured to: demosaic the at least one region of interest in the raw image data using a first demosaic algorithm, and demosaic regions outside the at least one region of interest in the raw image data using a second demosaic algorithm. The first demosaic algorithm is configured for enhancing high spatial frequencies in raw image data to a larger extent compared to the second demosaic algorithm.

Fine details and/or edges in digital images are typically associated with high spatial frequencies. In order to correctly reproduce such features of an image, associated image data must comprise the needed spatial frequencies.

The first demosaic algorithm may be configured to determine local spatial frequency distributions in the raw image data. The local spatial frequency distributions may be determined by determining gradients of the raw image data. The local spatial frequency distributions may be determined by determining a Fourier transform of the raw image data. At least a part of the first demosaic algorithm may comprise a multi-pass non-linear interpolation of the raw image data. For example, when reconstructing a pixel, the first demosaic algorithm may be configured to analyze pixels adjacent to the pixel in order to determine the local spatial frequency in the vicinity of the pixel. Thereby, edges and/or gradients and their orientations may be determined. The first demosaic algorithm may be configured to, for each pixel of the raw image data, determine each color of the color filter array taking edges and/or gradients and their orientations into account, thereby reconstructing the color of the pixel. For example, in case the pixel to be reconstructed is part of an edge, the color of the pixel to be reconstructed may be interpolated along the orientation of the edge. At least a part of the first demosaic algorithm may be based on pattern matching and/or template matching of the raw image data.

The second demosaic algorithm may be configured to determine a color of each pixel by analyzing each color of the color filter separately. At least a part of the second demosaic algorithm may comprise a linear interpolation of the raw image data. At least a part of the second demosaic algorithm may comprise a single-pass linear interpolation of the raw image data. The second demosaic algorithm may comprise a pixel duplication and/or a nearest neighbor algorithm. The second demosaic algorithm may maintain, or even increase, a signal to noise ratio of the reconstructed image data in comparison with the raw image data. Raw image data demosaiced using the second demosaic algorithm may have a reduced visual quality compared with raw image data demosaiced using the first demosaic algorithm. For example, edges and other fine details in reconstructed image data produced by the second demosaic algorithm may be blurry, and may comprise other distortions, such as zippering, purple fringing, and/or chromatic aliasing.

In other words, the first demosaic algorithm may be configured to prefer visual quality of the reconstructed image data instead of power-efficiency and/or size of the reconstructed image data. The second demosaic algorithm may be configured to prefer power-efficiency and/or size of the reconstructed image data instead of visual quality of the reconstructed image data.

The image capturing device 10A may further comprise a depth map component 110 and a focus component 112 as exemplified in Fig. 1A.

The depth map component 110 may be configured to determine a depth map of the scene 20. Data associated with the determined depth map of the scene 20 may be stored on the non-transitory computer-readable storage medium 118. The dept map may comprise data associated with distances from the image capturing device 10A to portions in the scene 20.

The image capturing device 10A may further comprise a radar 120, as exemplified in Fig. 1A. The depth map component 110 may be configured to determine the depth map of the scene 20 by using data supplied by the radar 120.

The focus component 112 may be configured to receive focus data of the imaging optics and determine portions of the scene 20 being in focus by the image capturing device 10A based on the depth map and the focus data. The focus data may be supplied by a focus system of the imaging optics 104. The focus system of the imaging optics 104 may be an autofocus system. The focus component 112 may determine at which distances from the image capturing device 10A an object is in focus by the imaging optics 104 from the focus data. Thus, the focus component 112 may determine portions of the scene 20 being in focus by comparing the distances at which an object is in focus by the imaging optics (from the focus data) with the distances to portions in the scene 20 from the depth map.

The at least one region of interest in the raw image data may correspond to the portions of the scene 20 being in focus. Thus, the color image reconstruction component 108 may be configured to only attempt to demosaic using the first demosaic algorithm (i.e. enhancing high spatial frequencies) raw image data for portions being in focus, i.e. for portions of the scene 20 where the imaging optics 104 may correctly resolve fine details of the scene 20.

The image capturing device 10A may further comprise a motion data component 114 as exemplified in Fig. 1A. The motion data component 114 may be configured to determine data associated with a level of motion of portions of the scene 20. The at least one region of interest in the raw image data may correspond to portions of the scene 20 having a level of motion below a threshold level of motion. Thus, the color image reconstruction component 108 may be configured to only attempt to demosaic using the first demosaic algorithm (i.e. enhancing high spatial frequencies) raw image data for portion having a motion below the threshold level of motion, i.e. for portions having a motion blur lower than a threshold motion blur associated with the threshold level of motion. The threshold level of motion may be based on an exposure time associated with the raw image data. A motion blur of portions of the scene 20 having a level of motion above the threshold level of motion may be significant, in that fine details of such portions are not correctly captured by the image capturing device 10A. Thus, the color image reconstruction component 108 may be configured to only attempt to demosaic using the first demosaic algorithm (i.e. enhancing high spatial frequencies) raw image data for portions having a level of motion below the threshold level of motion, i.e. for portions of the scene 20 not being affected by motion blur to such an extent that fine details are smeared out in the raw image data.

The raw image data may be associated with a plurality of raw images in a video sequence, and the motion data component 114 may be further configured to determine the data associated with the level of motion of portions of the scene 20 by comparing raw image data of a raw image with raw image data of a preceding raw image in the video sequence.

The motion data component 114 may be configured to determine the data associated with the level of motion of portions of the scene 20 by being configured to, for each portion of the scene 20: identify a preceding position in the scene 20 for the portion of the scene 20 in the raw image data associated with the preceding raw image in the video sequence; identify a position in the scene 20 for the portion of the scene 20 in the raw image data associated with the raw image in the video sequence; and determine the data associated with the level of motion of the portion of the scene 20 based on the preceding position and the position. The data associated with the level of motion of the portion of the scene 20 may be a difference between the position and the preceding position.

The data associated with the level of motion of portions of the scene 20 may indicate a direction of motion for portions of the scene 20, and the data motion component 114 may be further configured to determine the direction of motion. The second demosaic algorithm may be configured for enhancing high spatial frequencies in raw image data to a relatively larger extent in directions different from the direction of motion.

The second demosaic algorithm may comprise a multi-pass non-linear interpolation of the raw image data in directions different from the direction of motion. In other words, in directions different from the direction of motion the second demosaic algorithm may be similar to the first demosaic algorithm. The second demosaic algorithm may comprise a linear interpolation of the raw image data in directions parallel to the direction of motion.

The image capturing device 10A may further comprise an object detection component 115 configured to detect an object in the scene 20 from the raw image data. A portion of the scene 20 may correspond to a detected object in the scene 20. The preceding position in the scene 20 of the portion of the scene may correspond to a preceding position in the scene 20 of the detected object in the scene 20. The position in the scene 20 of the portion of the scene may correspond to a position in the scene 20 of the detected object in the scene 20. The direction of motion may be determined based on the preceding position and the position in the scene 20 of the detected object in the scene 20.

The level of motion for portions of the scene 20 may be determined based on a pan-tilt-zoom of the image capturing device 10A. For example, the image capturing device 10A may be configured to track a moving object in the scene 20 (e.g. a moving vehicle), such that the tracked moving object appears stationary, and stationary objects in the scene 20 (e.g. a stationary signboard) appears to move.

The image capturing device 10A may further comprise a color analyzation component 116 as exemplified in Fig. 1A.

The color analyzation component 116 may be configured to analyze the raw image data in order to determine colors for portions in the scene 20.

The at least one region of interest in the raw image data may correspond to portions of the scene 20 having a color included in a predetermined set of colors. Data associated with the predetermined set of colors may be stored on the non-transitory computer-readable storage medium 118. Thus, the color image reconstruction component 108 may be configured to only attempt to demosaic using the first demosaic algorithm (i.e. enhancing high spatial frequencies) raw image data for portions having a color included in the predetermined set of colors. This may allow for a flexible approach where the predetermined set of colors may be changed over time, reflecting, e.g., an operator's intention for monitoring the scene. As an example, if there is a search warrant out for a red car, the predetermined set of colors may be adjusted accordingly.

The image capturing device 10A may further comprise a data bus 122. One or more of the image sensor 102, the imaging optics 104, the region of interest component 106, the color image reconstruction component 108, the depth map component 110, the focus component 112, the motion data component 114, the color analyzation component, and the non-transitory computer-readable storage medium 118 may communicate via the data bus 122.

One or more of the region of interest component 106, the color image reconstruction component 108, the depth map component 110, the focus component 112, the motion data component 114, and the color analyzation component 116 may be software and/or hardware implemented. One or more of the region of interest component 106, the color image reconstruction component 108, the depth map component 110, the focus component 112, the motion data component 114, and the color analyzation component 116 may be implemented in a general-purpose processor, or as an application-specific circuit. One or more of the region of interest component 106, the color image reconstruction component 108, the depth map component 110, the focus component 112, the motion data component 114, and the color analyzation component 116 may be implemented in an image processing pipeline of the image capturing device 10A.

Figure 1B illustrates an image capturing device 10B similar to the image capturing device 10A described in relation to Fig. 1A. In the example shown in Fig. 1B, the image capturing device 10B is a stereo camera and comprises at least two image sensors 102A, 102B. The image capturing device 10B may comprise a first image sensor 102A and a second image sensor 102B as exemplified in Fig. 1B. First imaging optics 104A are configured to image the scene 20 on the first image sensor 102A, and second imaging optics 104B are configured to image the scene 20 on the second image sensor 102B. The depth map component 110 may, for the example shown in Fig. 1B, be configured to determine the depth map by comparing raw image data produced by the first image sensor 104A and the second image sensor 104B. Thus, the depth map may be determined without the use of a radar 120 for the image capturing device 10B exemplified in Fig. 1B. The other parts and components, as well as additional information such as the implementation of components, of the image capturing device 10B illustrated in Fig. 1B are configured in the same manner as described in relation to Fig. 1A. In order to avoid undue repetition, reference is made to the above.

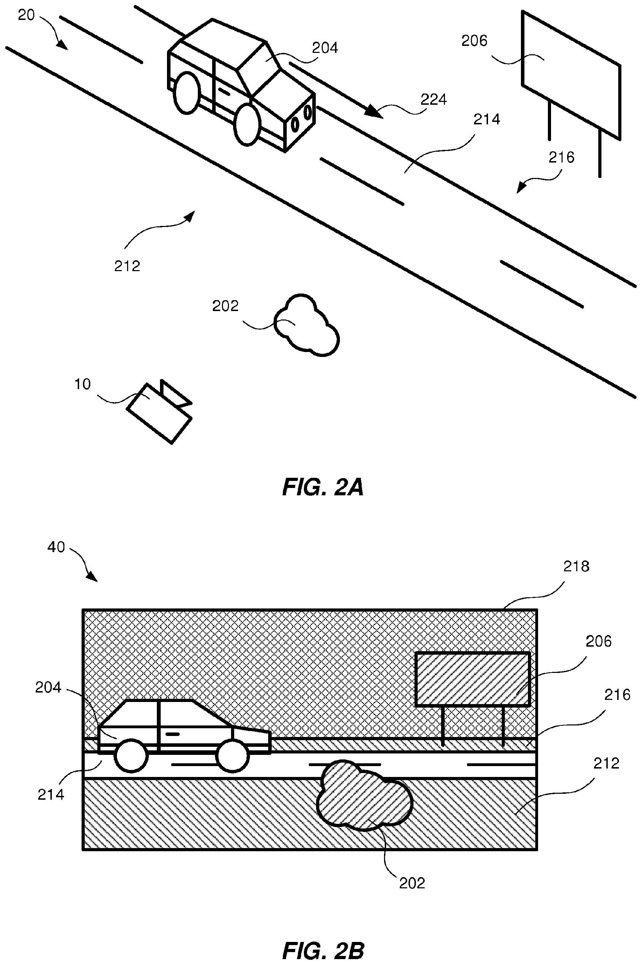

Figure 2A illustrates an example of a measurement scenario, where an image capturing device 10 is imaging a scene 20. The image capturing device 10 may be the image capturing device 10A/10B exemplified in Fig. 1A/Fig. 1B. The scene 20 comprises a shrub 202, a vehicle 204 moving along a road 214 (the motion of the vehicle 204 is indicated by an arrow 224), and a signboard 206. As is seen in Fig. 2A, the shrub 202, the vehicle 204, and the signboard 206 are arranged at different distances from the image capturing device 10. The ground 212, 216 on both sides of the road 214 is grass. Three different examples of how the at least one region of interest may be identified will now be described with reference to Fig. 2B - Fig. 2D.

Figure 2B illustrates a color image 40 depicting the scene 20 of Fig. 2A. The imaging optics 104 of the image capturing device 10 was configured such that the road 214 in Fig. 2A was in focus when the color image 40 was captured. Since the vehicle 204 is positioned on the road 214, the vehicle 204 is also in focus in the color image 40. As is indicated in Fig. 2B, the ground 212, 216 on the sides of the road 214 and the sky 218 were not in focus when the color image 40 was captured. Hence, the shrub 202, and the signboard 206 were not in focus when the color image 40 was captured.

Since the vehicle 204 and the road 214 were in focus when the color image 40 was captured, details of the vehicle 204 and the road 214 are visible in the color image 40. However, details of the ground 212, 216 on the sides of the road, the shrub 202, and the signboard 206 are not visible, since these portions of the scene were not in focus when the color image 40 was captured. Hence, when reconstructing the color image 40, details (associated with high spatial frequencies) are expected to be present for the vehicle 204 and the road 214, but not for the ground 212, 216 on the sides of the road, the shrub 202, and the signboard 206. Therefore, according to the present inventive concept, the vehicle 204 and the road 214 may be demosaiced with a demosaic algorithm that enhances high spatial frequencies to a higher degree than a demosaic algorithm used to demosaic portions of the scene 20 that are not in focus (i.e. the ground 212, 216 on the sides of the road 214, the shrub 202, the signboard 206, and the sky 218).

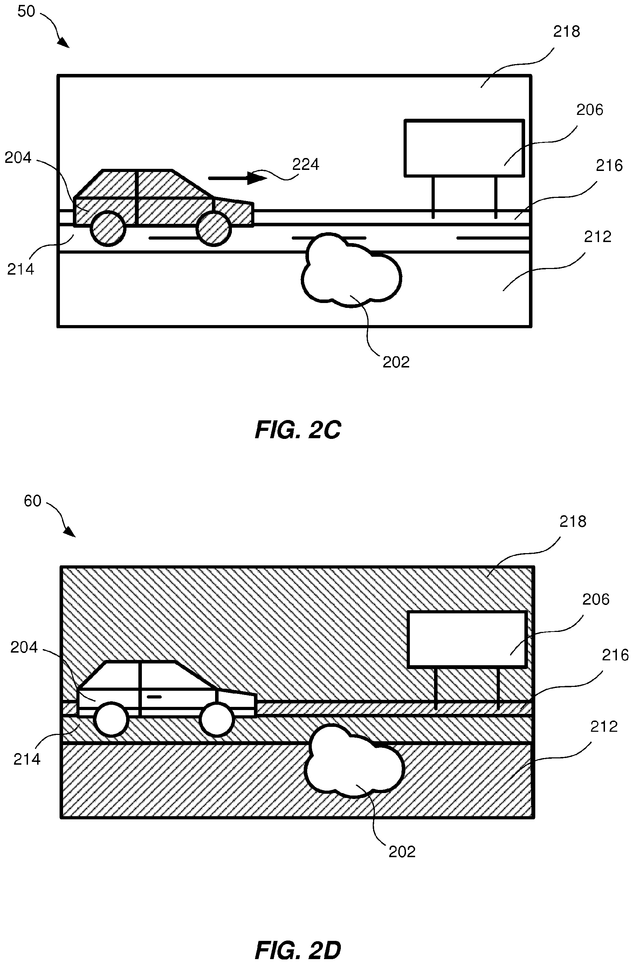

Figure 2C illustrates a color image 50 depicting the scene 20 of Fig. 2A. The imaging optics 104 of the image capturing device 10 was configured such that all features of the scene 20 was in focus when the color image 50 was captured. However, since the vehicle 204 is moving as indicated by the arrow 224, details of the vehicle 204 is not visible. This is an effect due to motion blur. The level of motion blur of the vehicle 204 in color image 50 depends on the speed of the vehicle 204 and on an exposure time associated with the raw image data associated with the color image 50. A skilled person should realize that, when capturing an image of a moving object, the level of motion blur of the moving object in the image will increase/decrease with increasing/decreasing exposure time (assuming the speed of the moving object is not changed). Hence, in case a motion level of the vehicle 204 is above a threshold level of motion (which typically depends on the exposure time associated with the raw image data), an extent of the motion blur of the vehicle 204 is such that fine details of the vehicle 204 is smeared out. As such, portions of the scene 20 having a motion higher than the threshold level of motion are not expected to comprise spatial frequencies needed to reproduce details of the moving portion. In the example shown in Fig. 2C, the vehicle 204 has a motion level higher than the threshold level of motion and details of the vehicle 204 are not properly reproduced. Hence, the vehicle 204 may be demosaiced using a demosaic algorithm that enhances high spatial frequencies to a lesser degree than a demosaic algorithm used to demosaic portions of the scene 20 that have a motion level below the threshold level (i.e. the ground 212, 216 on both sides of the road 214, the road 214, the bush 202, the signboard 206, and the sky 218).

As is shown in Fig. 2C, the vehicle 204 has a motion in a specific direction as indicated by the arrow 224, and details having an extension along the direction of motion is affected most by the motion blur. Hence, details having an extension in directions other than the direction of motion is affected by motion blur to a lesser extent. As such, the raw image data associated with the vehicle 204 may contain high spatial frequencies such that details may be reconstructed in directions other than the direction of motion. Hence, when reconstructing the color image 50, the vehicle 204 may be demosaiced using a demosaic algorithm that enhances high spatial frequencies in raw image data to a relatively larger extent in direction different from the direction of motion.

Figure 2D illustrates a color image 60 depicting the scene 20. The imaging optics 104 of the image capturing device 10 was configured such that all features of the scene 20 was in focus when the color image 60 was captured. Further, the exposure time of the raw image data associated with color image 60 was short such that the motion level of the vehicle 204 was below the threshold level of motion. However, in the color image 60 exemplified in Fig. 2D, the grass on the ground 212, 216 on both sides of the road 214, the road 214, and the sky 218 have colors which are not included in a predetermined set of colors. As such, these portions of the scene 20 are not of interest, and they are demosaiced using a demosaic algorithm that enhances high spatial frequencies to a lesser extent than a demosaic algorithm used to demosaic portions of the scene 20 having a color in the predetermined set of colors (i.e. the shrub 202, the vehicle 204, and the signboard 206).

It is to be understood that even though the scenarios in Fig. 2B - Fig. 2D are described as separate measurement scenarios, a skilled person realizes that two or more of them may be combined. For instance, the image capturing device 10 may be configured demosaic portions of the scene 20 that are in focus and having a motion level below a threshold motion level using a demosaic algorithm that enhances high spatial frequencies in a relatively larger extent than a demosaic algorithm used to demosaic other portions of the scene 20.

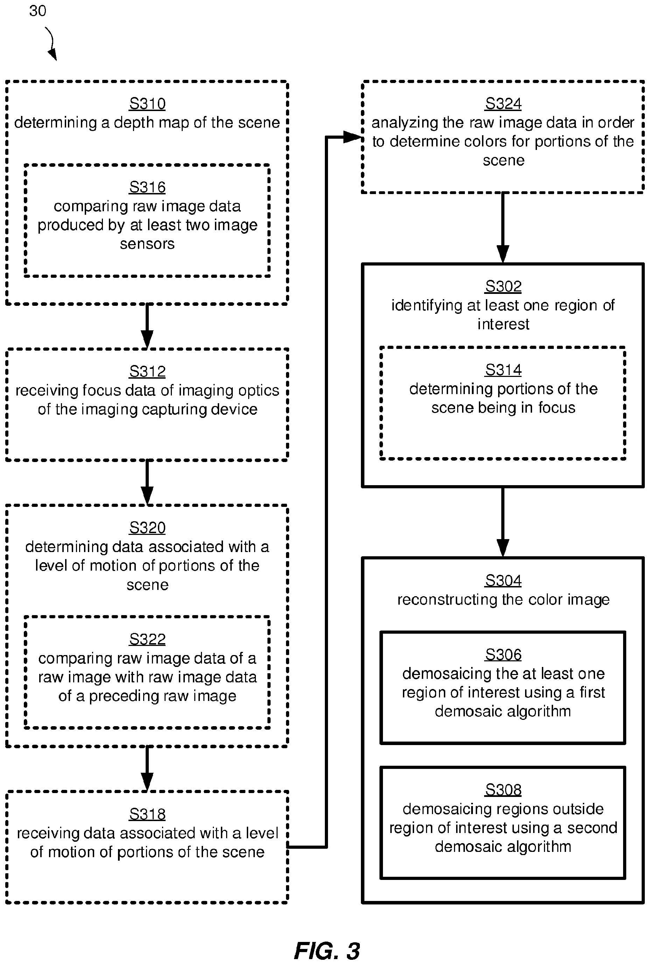

Figure 3 is a box scheme of a method 30 for reconstructing a color image 40, 50, 60 from raw image data depicting a scene 20, the raw image data produced by an image capturing device 10 comprising at least one image sensor 102. The method 30 comprises identifying at least one region of interest in the raw image data.

The method 30 further comprises reconstructing the color image 40, 50, 60 by: demosaicing the at least one region of interest in the raw image data using a first demosaic algorithm, and demosaicing regions outside the at least one region of interest in the raw image data using a second demosaic algorithm.

The first demosaic algorithm is configured for enhancing high spatial frequencies in raw image data to a larger extent compared to the second demosaic algorithm.

At least a part of the first demosaic algorithm may comprise a multi-pass non-linear interpolation of the raw image data, and at least a part of the second demosaic algorithm may comprise a linear interpolation of the raw image data.

The method 30 may further comprise: determining a depth map of the scene 20; and receiving focus data of imaging optics 104 of the image capturing device 10; wherein the step of identifying at least one region of interest in the raw image data may comprise determining portions of the scene 20 being in focus by the image capturing device 10 based on the depth map and the focus data; and wherein the at least one region of interest in the raw image data may correspond to the determined portions of the scene 20 being in focus.

The image capturing device 10 may comprise at least two image sensors 102A, 102B, and wherein the depth map may be determined by comparing raw image data produced by at the least two image sensors 102A, 102B.

The depth map may be determined by a radar 120.

The method 30 may further comprise: receiving data associated with a level of motion of portions of the scene 20; and wherein the at least one region of interest in the raw image data may correspond to portions of the scene 20 having a level of motion below a threshold level of motion.

The threshold level of motion may be based on an exposure time associated with the raw image data.

The raw image data may be associated with a plurality of raw images in a video sequence, the method 30 may further comprise: determining the data associated with the level of motion of portions of the scene 20 by comparing raw image data of a raw image with raw image data of a preceding raw image in the video sequence.

Determining the data associated with the level of motion of portions of the scene 20 may comprise, for each portion of the scene 20: identifying a preceding position in the scene 20 for the portion of the scene 20 in the raw image data associated with the preceding raw image in the video sequence; identifying a position in the scene 20 for the portion of the scene 20 in the raw image data associated with the raw image in the video sequence; determining data associated with the level of motion of the portion of the scene 20 based on the preceding position and the position.

The data associated with the level of motion of portions of the scene 20 may indicate a direction of motion for portions of the scene 20, and wherein the second demosaic algorithm may be configured for enhancing high spatial frequencies in raw image data to a relatively larger extent in directions different from the direction of motion.

The second demosaic algorithm may be configured for enhancing high spatial frequencies in raw image data to a relatively larger extent in directions different from the direction of motion than in the direction of motion.

The method 30 may further comprise: analyzing the raw image data in order to determine colors for portions in the scene 20; and wherein the at least one region of interest in the raw image data may correspond to portions of the scene 20 having a color included in a predetermined set of colors.

Although the method 30 has been described in a specific order of method steps, the order of the method steps may differ from what has been described above. Also, two or more steps may be performed concurrently or partially concurrent. For example, the steps of demosaicing (S306) the at least one region of interest in the raw image data using a first demosaic algorithm and demosaicing (S308) regions outside the at least one region of interest in the raw image data using a second demosaic algorithm may be performed concurrently or at least partially concurrent.

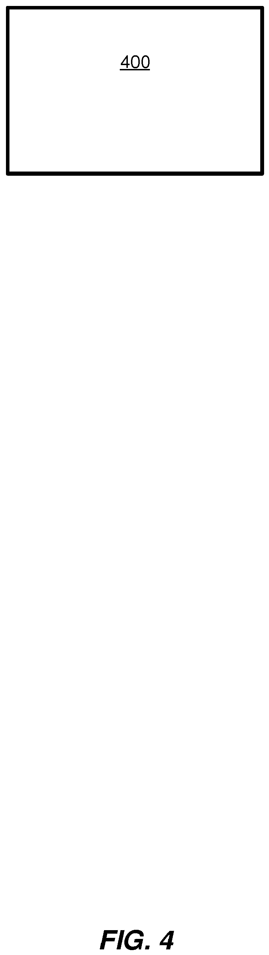

Figure 4 illustrates a non-transitory computer-readable storage medium 400 having stored thereon a program which is executable on an electronic device having processing capabilities. The program comprises program code portions which when executed on the electronic device is configured to: identify at least one region of interest in raw image data; and reconstruct a color image by being configured to: demosaic at least one region of interest in the raw image data using a first demosaic algorithm, and demosaic regions outside the at least one region of interest in the raw image data using a second demosaic algorithm; and wherein the first demosaic algorithm is configured for enhancing high spatial frequencies in raw image data to a larger extent compared to the second demosaic algorithm.

The electronic device may be the image capturing device 10 described in relation to Fig. 1A and/or Fig. 1B. The program may further comprise program code portions which when executed on the electronic device is configured to perform one or more functions of the depth map component 110, the focus component 112, the motion data component 114 and/or the color analyzation component 116 as described in relation to Fig. 1A and Fig. 1B. steps of the method. The program may further comprise program code portions which when executed on the electronic device is configured to perform one or more steps of the method 30 described in relation to Fig. 3.

The methods disclosed hereinabove may be implemented as software, firmware, hardware or a combination thereof. In a hardware implementation, the division of tasks between functional units, for example the region of interest component 106, the color image reconstruction component 108, the depth map component 110, the focus component 112, the motion data component 114, and the color analyzation component 116 referred to in the above description does not necessarily correspond to the division into physical units; to the contrary, one physical component may have multiple functionalities, and one task may be carried out by several physical components in cooperation. Certain components or all components for example the region of interest component 106, the color image reconstruction component 108, the depth map component 110, the focus component 112, the motion data component 114, and the color analyzation component 116 may be implemented as software executed by a digital signal processor or microprocessor, or be implemented as hardware or as an application-specific integrated circuit. Such software may be distributed on computer readable media, which may comprise computer storage media (or non-transitory media) and communication media (or transitory media). As is well known to a person skilled in the art, the term computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information, and which can be accessed by a computer. Further, it is well known to the skilled person that communication media typically embodies computer readable instructions, data structures, program modules or other data in a modulated data signal such as a carrier wave or other transport mechanism and includes any information delivery media.

The person skilled in the art realizes that the present inventive concept by no means is limited to the preferred variants described above. On the contrary, many modifications and variations are possible within the scope of the appended claims.

Additionally, variations to the disclosed variants can be understood and effected by the skilled person in practicing the claimed invention, from a study of the drawings, the disclosure, and the appended claims.

## Claims

1. A method (30) for reconstructing a color image (40, 50, 60) from raw image data depicting a scene (20), the raw image data produced by an image capturing device (10) comprising at least one image sensor (102), the method (30) comprising:
identifying (S302) at least one region of interest in the raw image data; and
reconstructing (S304) the color image (40, 50, 60) by:
demosaicing (S306) the at least one region of interest in the raw image data using a first demosaic algorithm, and
demosaicing (S308) regions outside the at least one region of interest in the raw image data using a second demosaic algorithm; and
wherein the first demosaic algorithm is configured for enhancing high spatial frequencies in raw image data to a larger extent compared to the second demosaic algorithm.

2. The method (30) according to claim 1, wherein at least a part of the first demosaic algorithm comprises a multi-pass non-linear interpolation of the raw image data, and wherein at least a part of the second demosaic algorithm comprises a linear interpolation of the raw image data.

3. The method (30) according to claim 1 or 2, the method (30) further comprising:
determining (S310) a depth map of the scene; and
receiving (S312) focus data of imaging optics (104) of the image capturing device (10);
wherein the step of identifying (S302) at least one region of interest in the raw image data comprises determining (S314) portions of the scene (20) being in focus by the image capturing device (10) based on the depth map and the focus data; and
wherein the at least one region of interest in the raw image data corresponds to the determined portions of the scene (20) being in focus.

4. The method (30) according to claim 3, wherein the image capturing device (10) comprises at least two image sensors (102A, 102B), and wherein the depth map is determined (S310) by comparing (S316) raw image data produced by at the least two image sensors (102A, 102B).

5. The method (30) according to claim 3, wherein the depth map is determined by a radar (120).

6. The method (30) according to any of the preceding claims, the method (30) further comprising:
receiving (S318) data associated with a level of motion of portions of the scene (20); and
wherein the at least one region of interest in the raw image data corresponds to portions of the scene (20) having a level of motion below a threshold level of motion.

7. The method (30) according to claim 6, wherein the threshold level of motion is based on an exposure time associated with the raw image data.

8. The method (30) according to claim 6 or 7, wherein the raw image data is associated with a plurality of raw images in a video sequence, the method (30) further comprising:
determining (S320) the data associated with the level of motion of portions of the scene (20) by comparing (S322) raw image data of a raw image with raw image data of a preceding raw image in the video sequence.

9. The method (30) according to any one of claims 6-8, wherein the data associated with the level of motion of portions of the scene (20) indicates a direction of motion for portions of the scene (20), and wherein the second demosaic algorithm is configured for enhancing high spatial frequencies in raw image data to a relatively larger extent in directions different from the direction of motion.

10. The method (30) according to any preceding claim, the method (30) further comprising:
analyzing (S324) the raw image data in order to determine colors for portions in the scene (20); and
wherein the at least one region of interest in the raw image data corresponds to portions of the scene (20) having a color included in a predetermined set of colors.

11. An image capturing device (10) configured to reconstruct a color image (40, 50, 60) from raw image data depicting a scene (20), the device (10) comprising:
at least one image sensor (102) configured to produce the raw image data depicting the scene (20);
imaging optics (104) configured to image the scene (20) onto the at least one image sensor (102);
a region of interest component (106) configured to identify at least one region of interest in the raw image data; and
a color image reconstruction component (108) configured to reconstruct the color image (40, 50, 60) by being configured to:
demosaic the at least one region of interest in the raw image data using a first demosaic algorithm, and
demosaic regions outside the at least one region of interest in the raw image data using a second demosaic algorithm; and
wherein the first demosaic algorithm is configured for enhancing high spatial frequencies in raw image data to a larger extent compared to the second demosaic algorithm.

12. The image capturing device (10) according to claim 11, further comprising:
a depth map component (110) configured to determine a depth map of the scene (20); and
a focus component (112) configured to:
receive focus data of the imaging optics (104), and
determine portions of the scene (20) being in focus by the image capturing device (10) based on the depth map and the focus data; and
wherein the at least one region of interest in the raw image data corresponds to the portions of the scene (20) being in focus.

13. The image capturing device (10) according to claim 11 or 12, further comprising:
a motion data component (114) configured to determine data associated with a level of motion of portions of the scene (20); and
wherein the at least one region of interest in the raw image data corresponds to portions of the scene (20) having a level of motion below a threshold level of motion.

14. The image capturing device (10) according to any one of claims 11 - 13, further comprising:
a color analyzation component (116) configured to analyze the raw image data in order to determine colors for portions in the scene (20); and
wherein the at least one region of interest in the raw image data corresponds to portions of the scene (20) having a color included in a predetermined set of colors.

15. A non-transitory computer-readable storage medium (400) having stored thereon a program which is executable on an electronic device having processing capabilities, wherein the program comprises program code portions which when executed on the electronic device is configured to:
identify at least one region of interest in raw image data; and
reconstruct a color image by being configured to:
demosaic at least one region of interest in the raw image data using a first demosaic algorithm, and
demosaic regions outside the at least one region of interest in the raw image data using a second demosaic algorithm; and
wherein the first demosaic algorithm is configured for enhancing high spatial frequencies in raw image data to a larger extent compared to the second demosaic algorithm.
